# EUROPÄISCHE PATENTANMELDUNG

(11) **EP 0 772 367 A2**
(43) Veröffentlichungstag der Anmeldung: **07.05.1997**
(21) Anmeldenummer: 96114084.5
(22) Anmeldetag: 03.09.1996
(51) Int. Cl.: H04Q 7/32, H04Q 7/22

(54) **Mobilfunksystem**

(30) Priorität: 07.09.1995 DE 19533119
(71) Anmelder: SIEMENS AKTIENGESELLSCHAFT, 80333 München (DE)
(72) Erfinder: Hofmann, Jürgen, Dipl.-Ing. (FH), 85304 Ilmmünster (DE)

(57) **Zusammenfassung**

Beschrieben wird ein Mobilfunksystem mit einer zentralen Servicestation (10), die über zwischengeschaltete Vermittlungseinheiten (14) mit mindestens einer mobilen Funkstation (20) in Funkkontakt steht und mit dieser digitale Daten austauscht. Die mobile Funkstation (20) enthält zum Steuern der Datenkommunikation einen Mikroprozessor (24), der durch Steuerbefehle eines Steuerprogramms gesteuert wird und der eine von der Servicestation (10) gemäß einem vorbestimmten Datenübertragungsprotokoll ausgesendete Kurzmitteilung erkennt und auswertet. Der Mikroprozessor (24) ändert auf der Grundlage von in der Kurzmitteilung enthaltenen Informationen den Inhalt seines Steuerprogramms. Auf diese Weise können z.B. technische Funktionen der Funkstation (20) freigegeben oder gesperrt werden.

## Beschreibung

Die Erfindung betrifft ein Mobilfunksystem mit einer zentralen Servicestation, die über zwischengeschaltete Vermittlungseinheiten mit mindestens einer mobilen Funkstation in Funkkontakt steht und mit dieser digitale Daten austauscht, wobei die mobile Funkstation zum Steuern der Datenkommunikation einen Mikroprozessor enthält, der durch Steuerbefehle eines Steuerprogramms gesteuert wird und der eine von der Servicestation gemäß einem vorbestimmten Datenübertragungsprotokoll ausgesendete Kurzmitteilung erkennt und auswertet.

Bei einem bekannten digitalen zellularen Mobilfunksystem gemäß dem GSM-System (Funkübertragungssystem gemäß den Empfehlungen des CEPT-Unterausschusses GROUPE SPÈCIAL MOBIL) kann von einer zentralen Servicestation aus eine Kurzmitteilung an ein an das Mobilfunknetz angeschlossenes Mobilfunkgerät ausgesendet werden. Diese Kurzmitteilung enthält im allgemeinen kurze Texte mit beispielsweise bis zu 160 Zeichen. Dieser spezielle Dienst im Mobilfunksystem, der auch als Short Message Service (SMS) bezeichnet wird, benutzt nicht den normalen Sprechkanal zur Übertragung, sondern einen Signalisierungskanal. Die Kosten für die Übertragung einer Kurzmitteilung sind daher sehr niedrig und betragen im allgemeinen lediglich eine Gebühreneinheit. In der Praxis werden solche Kurzmitteilungen beispielsweise dazu genutzt, um über aktuelle Tarife und sonstige Neuheiten zu informieren. Außerdem kann der Kurzmitteilungs-Dienst auch von jedem anderen am Mobilfunknetz teilnehmenden Gerät mit DTMF-Zeichengabe verwendet werden, um beispielsweise Mitarbeiter im Außendienst über Termine zu informieren. Im allgemeinen werden die in der Kurzmitteilung enthaltenen Informationen an einen Bediener des Mobilfunkgerätes über eine Anzeige ausgegeben. Eine Nutzung des Kurzmitteilungs-Dienstes zum Steuern einer mobilen Funkstation oder eines Mobilfunkgerätes ist bislang nicht bekannt geworden.

Es ist Aufgabe der Erfindung, Steuerfunktionen einer Mobilfunkstation des Mobilfunksystems mit geringem technischen und wirtschaftlichen Aufwand abzuändern.

Diese Aufgabe wird für ein Mobilfunksystem eingangs genannter Art dadurch gelöst, daß der in der mobilen Funkstation enthaltene Mikroprozessor auf der Grundlage von in der Kurzmitteilung enthaltenen Informationen den Inhalt seines Steuerprogramms ändert.

Bei der Erfindung wird der bekannte Kurzmitteilungs-Dienst im Mobilfunksystem zur Übertragung von Daten genutzt. Abweichend vom Inhalt der bisher bekannten Kurzmitteilungen, werden Informationen zur Steuerung der mobilen Funkstation selbst übertragen. Der Mikroprozessor wertet diese Informationen aus und veranlaßt selbsttätig ein Ändern des Inhalts seines in einem Speicher abgelegten Steuerprogramms. Da die Hardware-Komponenten für die Realisierung des Kurzmitteilungs-Dienstes weiter genutzt werden können, bleibt der technische Aufwand bei der Realisierung der Erfindung gering. Die Anwendung des kostengünstigen Kurzmitteilungs-Dienstes bringt einen wirtschaftlichen Vorteil, da im allgemeinen nur eine Telefongebühreneinheit für die Übermittlung der Steuerdaten anfällt.

Ein bevorzugtes Ausführungsbeispiel sieht vor, daß das Steuerprogramm mindestens einen Steuerabschnitt enthält, der abhängig von den in der Kurzmitteilung enthaltenen Informationen freigegeben oder gesperrt wird. Die mobile Funkstation ist bei dieser Weiterbildung mit verschiedenen Steuerfunktionen vorbereitet, welche als Steuerbefehle in Steuerabschnitten des Steuerprogramms hinterlegt sind. Abhängig von den Steuerdaten in der Kurzmitteilung können nun einzelne Steuerabschnitte freigegeben, d.h. aktiviert, werden. Die mobile Funkstation kann dann die in diesem Steuerabschnitt hinterlegten Steuerbefehle nutzen und die entsprechenden Funktionen ausführen. Auf diese Weise ist es möglich, die mobile Funkstation mit zahlreichen technischen Funktionsmerkmalen auszustatten, die zunächst inaktiv geschaltet sind und die ohne eine Freischaltung vom Besitzer der Funkstation nicht genutzt werden können. Ein Teilnehmer am Mobilfunknetz kann bei einem Netzbetreiber die Freischaltung einzelner oder sämtlicher Funktionen beantragen und nur für diese Funktionen einen Kaufpreis oder eine Miete entrichten. Der Netzbetreiber gibt nach Zahlung des Kaufpreises die entsprechende technische Funktion der mobilen Funkstation frei, die dann der Anwender nutzen kann. Auf diese Weise kann mit einem einzigen Grundmodell einer mobilen Funkstation eine Vielfalt von technischen Funktionen bereitgestellt werden, wie sie sonst nur bei unterschiedlichen Gerätemodellen üblich ist. Unter diesen Funktionen wählt der Anwender die seinen Kaufvorstellungen entsprechende Zusammenstellung mit den zugehörigen Funktionsmerkmalen aus.

Beispielsweise kann der freigegebene Steuerabschnitt Steuerbefehle gemäß einer Taschenrechnerfunktion oder gemäß einem Spielprogramm enthalten. Wenn beispielsweise durch eine Kurzmitteilung die Taschenrechnerfunktion freigeschaltet ist, so kann der Bediener der Funkstation über die Tastatur Zahlen eingeben und arithmetische Funktionen ausführen, deren Ergebnisse an der Anzeigeeinheit der Funkstation angezeigt werden.

Bei einer anderen Weiterbildung der Erfindung kann vorgesehen sein, daß auf der Grundlage der in der Kurzmitteilung enthaltenen Informationen ausgewählte Steuerbefehle korrigiert oder abgeändert werden. Diese Weiterbildung kann in vorteilhafter Weise dann eingesetzt werden, wenn sich bei bereits verkauften Geräten herausstellt, daß das Steuerprogramm fehlerhafte Steuerbefehle enthält. Durch eine Kurzmitteilung können diese fehlerhaften Steuerbefehle korrigiert werden. Eine bislang übliche Rückholaktion für Funkstationen, die diese fehlerhaften Steuerbefehle enthalten, kann entfallen, wodurch wirtschaftlicher Schaden vermieden wird.

Eine weitere Ausgestaltung der Erfindung sieht vor, daß auf der Grundlage der in der Kurzmitteilung enthaltenen Informationen neue Steuerbefehle in das Steuerprogramm eingefügt werden. Wenn der Netzbetreiber zum Beispiel einen neuen Dienst in seinem Mobilfunknetz anbietet, für den bisherige mobile Funkstationen noch nicht ausrüstet sind, so kann diese Weiterbildung vorteilhaft genutzt werden. Die zur Nutzung des neuen Dienstes erforderlichen Steuerbefehle werden nämlich an die mobile Funkstation im Rahmen einer Kurzmitteilung übermittelt und dann in das Steuerprogramm eingefügt. Nach Freigabe des zugehörigen Steuerabschnitts kann der Besitzer der Funkstation den neuen Dienst nutzen.

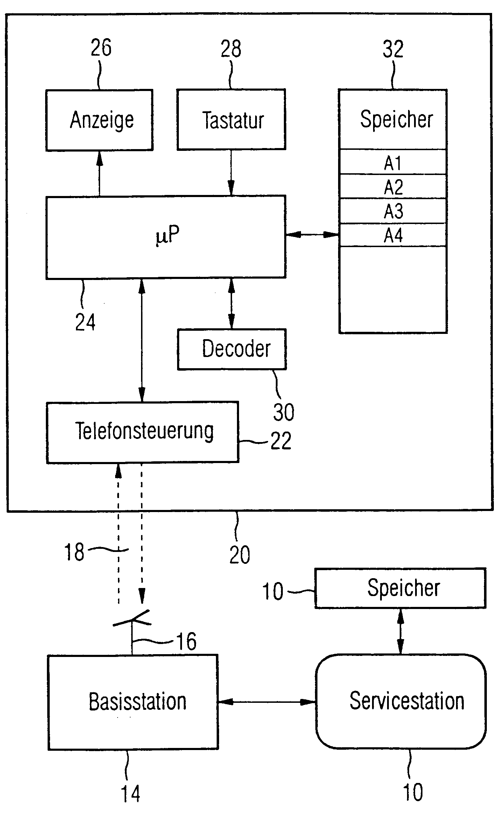

Ein Ausführungsbeispiel der Erfindung wird im folgenden anhand der einzigen Figur der Zeichnung beschrieben. In dieser Figur sind Netzelemente des digitalen zellularen Mobilfunksystems D900 nach dem GSM-Standard dargestellt. Aus Vereinfachungsgründen sind nur einige wesentliche Netzelemente gezeigt, um die prinzipielle Wirkungsweise der Erfindung zu erläutern. Eine zentrale Servicestation 10 führt den Verbindungsaufbau im Mobilfunknetz und zu anderen nicht dargestellten Netzen durch, beispielsweise zu einem ISDN-Telefonnetz. Das Mobilfunksystem umfaßt einen Kurzmitteilungs-Service, kurz SMS (Short Message Service) genannt, bei dem von einem Teilnehmer des Mobilfunknetzes eine Kurzmitteilung in einem Speicher 12 zwischengespeichert wird. Das Vorhandensein einer solchen Kurzmitteilung wird dem Adressat bei Aktivierung seines Teilnehmergerätes angezeigt. Üblicherweise wird dann der Text dieser Kurzmitteilung aus dem Speicher 12 an das Teilnehmergerät gesendet und dort auf einer Anzeigeeinheit angezeigt.

Die Servicestation 10 steht mit einer Basisstation 14 in Verbindung, welche durch eine Antenne 16 über eine Luftschnittstelle 18 die Verbindung mit einem Teilnehmergerät, in diesem Fall ein Mobilfunkgerät 20 herstellt. Das Funksignal wird von einer Telefonsteuerung 22 weiterverarbeitet, die durch einen Mikroprozessor 24 gesteuert wird. Diese Telefonsteuerung 22 umfaßt weitere, nicht dargestellte Hardware-Elemente des Mobilfunkgerätes 20, wie beispielsweise einen Lautsprecher und ein Mikrofon. Der Mikroprozessor 24 steuert eine Anzeigeeinheit 26 und erhält von einer Tastatur 28 Eingabesignale. In der Figur sind die zum Betrieb des Mikroprozessors 24 erforderlichen üblichen Hardeware-Komponenten, wie Ein-/Ausgabeeinheiten, Datenbusse etc., aus Übersichtsgründen nicht dargestellt. Der Mikroprozessor 24 wird durch ein Steuerprogramm, dessen Steuerbefehle in einem Speicher 32 abgelegt sind, gesteuert. Dieser Speicher 32 enthält Steuerabschnitt A1, A2, A3, A4, in welchen die zu einer bestimmten technischen Funktion des Mobilfunkgeräts 20 gehörenden Steuerbefehle für den Mikroprozessor 24 gespeichert sind. Beispielsweise kann mithilfe der im Steuerabschnitt A1 enthaltenen Steuerbefehle eine Taschenrechnerfunktion ausgeführt werden. Der Steuerabschnitt A2 enthält Steuerbefehle, die ein Spielprogramm realisieren. Die weiteren Steuerabschnitte A3 und A4 enthalten weitere nützliche Funktionen.

Der Mikroprozessor 24 greift ferner auf einen Decoder 30 zu, der die in der Kurzmitteilung enthaltenen codierten Informationen decodiert. Dieser Decoder 30 wird üblicherweise softwaretechnische realisiert, d.h. im Speicher 32 ist ein entsprechender Speicherabschnitt mit Steuerbefehlen vorgesehen, die den Mikroprozessor 24 so steuern, daß er die Decoderfunktion des Decoders 30 erfüllt.

Im folgenden wird die Funktionsweise des Ausführungsbeispiels nach der Erfindung erläutert. Ein Netzbetreiber, der das im Speicher 32 enthaltene Steuerprogramm ändern will, übermittelt der Servicestation 10 eine Kurzmitteilung, die an das Mobilfunkgerät 20 weitergeleitet werden soll. Die Kurzmitteilung mit den codierten Informationen wird zunächst im Speicher 12 zwischengespeichert. Dem Mikroprozessor 24 des Mobilfunkgeräts 20 wird dann mitgeteilt, daß eine Kurzmitteilung vorliegt. Bei Aktivierung des Mobilfunkgeräts 20 wird dem Teilnehmer über die Anzeigeeinheit 26 angezeigt, daR für das Mobilfunkgerät 20 eine Kurzmitteilung vorliegt. Die Ablaufsteuerung im Mobilfunkgerät 20 kann nun so ausgelegt sein, daß die Kurzmitteilung selbsttätig durch den Mikroprozessor 24 oder erst nach Eingabe eines initiierenden Befehls auf der Tastatur 28 übernommen wird. Wie erwähnt, wird die Kurzmitteilung auf dem Signalisierungskanal, also ohne Nutzung des Sprechkanals, über die Luftschnittstelle 18 an das Mobilfunkgerät 20 übertragen. Die Kurzmitteilung enthält codierte Informationen, anhand derer der Mikroprozessor 24 erkennt, daß eine Änderung des Inhalts des im Speicher 32 gespeicherten Steuerprogramms gewünscht wird. Mithilfe des Decoders 30 wird der Inhalt der Kurzmitteilung decodiert und daraufhin die Änderung des Steuerprogramms veranlaßt.

Beispielsweise kann die Kurzmitteilung die Information enthalten, daß der Steuerabschnitt A1 freigeschaltet werden soll. Demgemäß ändert der Mikroprozessor 24 sein Ablaufprogramm, z.B. durch Änderung von Sprungadresse oder durch eine indirekte Adressierung, derart, daß beim Abarbeiten des Steuerprogramms auch der Steuerabschnitt A1 durchlaufen wird. Da der Steuerabschnitt A1 Steuerbefehle zur Realisierung einer Taschenrechnerfunktion enthält, kann nunmehr der Bediener des Mobilfunkgeräts 20 über die Tastatur 28 arithmetische Operationen mit Unterstützung des Mikroprozessors 24 ausführen, deren Ergebnisse auf der Anzeigeeinheit 26 dargestellt werden. In analoger Weise können auch die weiteren Steuerabschnitt A2 bis A4 freigeschaltet werden.

Die in der Kurzmitteilung enthaltenen Informationen können auch ein Sperren von Steuerabschnitten A1 bis A4 veranlassen. Wenn beispielsweise ein Besitzer des Mobilfunkgeräts 20 bestimmte technische Funktionen nicht mehr benötigt und dafür an den Netzbetreiber keine Gebühren zahlen will, so läßt er diese Funktion sperren. Der Netzbetreiber wird dann an das Mobilfunkgerät 20 eine Kurzmitteilung aussenden, wobei auf der Basis der in der Kurzmitteilung enthaltenen Informationen ein bestimmter Steuerabschnitt A1 bis A4 gesperrt wird. Beim Abarbeiten des Steuerprogramms wird dann der gesperrte Steuerabschnitt A1 bis A4 übersprungen.

Auf analoge Weise ist es möglich, Steuerbefehle im Speicher 32 auf der Grundlage der in der Kurzmitteilung enthaltenen Informationen zu korrigieren oder abzuändern. Wenn sich beim Betrieb eines Mobilfunkgeräts herausstellt, daß sein Steuerprogramm fehlerhaft ist, so mußte bisher in einer Rückholaktion bei sämtlichen Mobilfunkgeräten das Steuerprogramm bzw. der Speicher 32 ausgetauscht werden. Gemäß der vorliegenden Erfindung ist es nunmehr möglich, einzelne fehlerhafte Steuerbefehle zu korrigieren. Hierzu sendet der Netzbetreiber an sämtliche betroffenen Mobilfunkgeräte eine Kurzmitteilung aus, die codierte Informationen von der Art enthält, die das Steuerprogramm abändern. Ein oder mehrere fehlerhafte Steuerbefehle werden dann im Speicher 32 korrigiert. Auf ähnliche Weise können auf der Grundlage der in der Kurzmitteilung enthaltenen Informationen neue Steuerbefehle in das Steuerprogramm eingefügt werden. Vorteilhafterweise enthält die Kurzmitteilung einen Erkennungscode, der aus der Identifikationsnummer des Mobilfunkgerätes, der sogenannten IMEI-Nummer, abgeleitet wird. Auf diese Weise wird sichergestellt, daß der richtige Adressat angesprochen wird. Die in der Kurzmitteilung enthaltenen Informationen können in der Servicestation durch einen Verschlüsselungsalgorithmus verschlüsselt und dann übertragen werden. Dem Mobilfunkgerät ist der Schlüssel ebenfalls bekannt, so daß die verschlüsselten Informationen im Mobilfunkgerät decodiert werden können. Durch diese Maßnahmen wird die Datensicherheit weiter gesteigert.

## Patentansprüche

1. Mobilfunksystem mit einer zentralen Servicestation (10), die über zwischengeschaltete Vermittlungseinheiten (14) mit mindestens einer mobilen Funkstation (20) in Funkkontakt steht und mit dieser digitale Daten austauscht,
wobei die mobile Funkstation (20) zum Steuern der Datenkommunikation einen Mikroprozessor (24) enthält, der durch Steuerbefehle eines Steuerprogramms gesteuert wird
und der eine von der Servicestation (10) gemäß einem vorbestimmten Datenübertragungsprotokoll ausgesendete Kurzmitteilung erkennt und auswertet, dadurch **gekennzeichnet**, daß der Mikroprozessor (24) auf der Grundlage von in der Kurzmitteilung enthaltenen Informationen den Inhalt des Steuerprogramms ändert.

2. Mobilfunksystem nach Anspruch 1, dadurch **gekennzeichnet**, daß das Steuerprogramm mindestens einen Steuerabschnitt (A1, A2, A3, A4) enthält, der abhängig von den in der Kurzmitteilung enthaltenen Informationen freigegeben oder gesperrt wird.

3. Mobilfunksystem nach Anspruch 1 oder 2, dadurch **gekennzeichnet**, daß der Steuerabschnitt (A1) Steuerbefehle gemäß einer Taschenrechnerfunktion enthält.

4. Mobilfunksystem nach einem der vorhergehenden Ansprüche, dadurch **gekennzeichnet**, daß der Steuerabschnitt (A2) Steuerbefehle gemäß einem Spielprogramm enthält.

5. Mobilfunksystem nach einem der vorhergehenden Ansprüche, dadurch **gekennzeichnet**, daß auf der Grundlage der in der Kurzmitteilung enthaltenen Informationen ausgewählte Steuerbefehle korrigiert oder abgeändert werden.

6. Mobilfunksystem nach einem der vorhergehenden Ansprüche, dadurch **gekennzeichnet**, daß auf der Grundlage der in der Kurzmitteilung enthaltenen Informationen neue Steuerbefehle in das Steuerprogramm eingefügt werden.

7. Mobilfunksystem nach einem der vorhergehenden Ansprüche, dadurch **gekennzeichnet**, daß es ein digitales zelluläres System ist.

8. Mobilfunksystem nach einem der vorhergehenden Ansprüche, dadurch **gekennzeichnet**, daß die Kurzmitteilung einen Erkennungscode enthält, der sich aus der Identifikationsnummer (IMEI) der mobilen Funkstation (20) ableitet.

9. Mobilfunksystem nach Anspruch 8, dadurch **gekennzeichnet**, daß die Informationen durch einen Verschlüsselungsalgorithmus in der Servicestation (10) verschlüsselt codiert werden, und daß diese Information in der mobilen Funkstation (20) decodiert werden.
